# EUROPÄISCHE PATENTSCHRIFT

(11) **EP 0 651 918 B1**
(45) Veröffentlichungstag und Bekanntmachung des Hinweises auf die Patenterteilung: **24.04.1996**
(21) Anmeldenummer: 93915872.1
(22) Anmeldetag: 10.07.1993
(51) Int. Cl.: H01R 15/08, H01R 13/41, H01R 13/52, H02G 15/196

(54) **ELASTISCH VERFORMBARER ISOLIER- UND DICHTUNGSKÖRPER FÜR KABELSTECKER UND DERGLEICHEN**
ELASTICALLY DEFORMABLE INSULATING AND SEALING BODY FOR CABLE PLUGS AND THE LIKE
CORPS ISOLANT ET ETANCHE DEFORMABLE ELASTIQUEMENT POUR CONNECTEUR DE CABLES ET ANALOGUE

(30) Priorität: 20.07.1992 DE 4223818
(43) Veröffentlichungstag der Anmeldung: 10.05.1995
(73) Patentinhaber: KARL PFISTERER ELEKTROTECHNISCHE SPEZIALARTIKEL GMBH & CO. KG, D-70327 Stuttgart (DE)
(72) Erfinder: BÄUERLE, Gottfried, D-70736 Fellbach (DE); SANDER, Dieter, D-70619 Stuttgart (DE)
(74) Vertreter: Patentanwälte Bartels, Held und Partner
(86) Internationale Anmeldenummer: EP9301810
(87) Internationale Veröffentlichungsnummer: WO9402978

(56) Entgegenhaltungen:
- EP-A- 0 252 601
- WO-A-92/16985
- DE-A- 2 211 425
- DE-A- 3 640 477

## Beschreibung

Die Erfindung betrifft einen elastisch verformbaren Isolier- und Dichtungskörper für Kabelstecker und dergleichen mit einem zentralen Durchgangskanal zur Aufnahme eines Kabels eines Energieversorgungssystems, insbesondere eines Mittelspannungs- oder Hochspannungsenergieversorgungssystems, und mit einer auf die Oberfläche des Isolier- und Dichtungskörpers aufgebrachten, elektrisch leitenden Schicht.

Bei den bekannten Isolier- und Dichtungskörpern dieser Art, die in der Regel aus Siliconkautschuk bestehen und die Aufgabe haben, das Kontaktsystem, das die Verbindung mit dem Kabel in einer den Kabelstecker aufnehmenden Steckbuchse oder dergleichen herstellt, nach außen hin mechanisch und elektrisch dicht zu verschließen, dient die leitende Schicht der Bildung einer Elektrode, die kapazitiv an das Kabel angekoppelt ist und ein für die vom Kabel geführte Spannung kennzeichnendes Spannungssignal liefert. Da eine derartige leitende Schicht keine Lötverbindung erlaubt, ist die elektrisch leitende Verbindung zwischen der leitenden Schicht und einer Signalleitung aufwendig. Ein weiterer Nachteil besteht darin, daß zusätzlich zu dieser Elektrode eine Feldsteuerelektrode erforderlich ist.

Der Erfindung liegt daher die Aufgabe zugrunde, einen verbesserten elastisch verformbaren Isolier- und Dichtungskörper zu schaffen. Diese Aufgabe löst ein Isolier- und Dichtungskörper mit den Merkmalen des Anspruches 1.

Die Herstellung einer elektrisch leitenden Verbindung mit der elektrisch leitenden Schicht eines derartigen Isolier- und Dichtungskörpers ist problemlos, weil der umgestülpte Abschnitt den für eine gute Kontaktierung der Leitschicht erforderlichen Kontaktdruck erzeugen kann. Es braucht deshalb beispielsweise nur der abisolierte Endabschnitt einer Signalleitung oder sonstigen Leitung oder ein Kontaktkörper, der mit der Leitung verbunden ist, zwischen den übergestülpten Abschnitt und den von ihm übergriffenen Abschnitt im Bereich der elektrisch leitenden Schicht gelegt zu werden. Da das Material, aus dem der Isolier- und Dichtungskörper besteht, eine hohe Elastizität hat und außerdem der übergestülpte Abschnitt nur eine geringe Wandstärke aufzuweisen braucht, bereitet das Überstülpen dieses Abschnittes keine Probleme, auch wenn er dabei aufgeweitet und damit vorgespannt wird.

Bei einer bevorzugten Ausführungsform stehen die beiden hülsenartig ausgebildeten Abschnitte über eine Verbindungszone mit verringerter Wandstärke in Verbindung. Hierdurch wird das Überstülpen erleichtert. Außerdem kann durch eine solche Verbindungszone ein Raum, bei dem es sich auch um einen Ringraum handeln kann, gebildet werden, der einen mit einer Leitung verbundenen, vorzugsweise elektrisch leitenden Körper aufnehmen kann. Dieser Körper kann sowohl der Zugentlastung der Leitung dienen als auch, wenn er elektrisch leitend ist, der Kontaktbildung. Es kann sich bei diesem Körper um einen Ring, beispielsweise einen elastischen Ring aus einem leitfähigen Material, aber beispielsweise auch um einen, den innenliegenden hülsenförmigen Abschnitt nur auf einem Teil seines Umfangs umfassenden Körper handeln, dessen an der Verbindungszone anliegender Rand vorzugsweise verdickt ist. Besteht dieser Körper aus einem leitenden Blech, kann beispielsweise diese Verdickung durch zu einer Öse umgebogene Zähne längs des verdickten Randes gebildet sein. Selbstverständlich sind aber auch andere Zugentlastungen möglich, beispielsweise eine Zugentlastung durch einen Knoten der Leitung.

Vorzugsweise weist der eine hülsenartig ausgebildete Abschnitt eine vorspringende, ringwulstartige Materialpartie auf, die vollständig von einer ringnutartigen Vertiefung des anderen hülsenförmigen Abschnittes aufgenommen ist, wenn die beiden hülsenartigen Abschnitte übereinandergestülpt sind. Eine derartige, ringwulstartige Materialpartie, die vorzugsweise ein sägezahnartiges Querschnittsprofil hat, verhindert zusammen mit der ringnutartigen Vertiefung, daß sich nach dem Überstülpen der übergestülpte Abschnitt in axialer Richtung relativ zu dem innenliegenden Abschnitt verschieben kann. Außerdem führt die ringwulstartige Materialpartie dann, wenn sie nicht in die ringnutartige Vertiefung eingreift, zu einer Auswölbung auf der Außenseite des übergestülpten Abschnittes. An dieser Auswölbung kann der Monteur erkennen, daß der übergestülpte Abschnitt noch nicht seine vorgeschriebene Position relativ zum innenliegenden Abschnitt erreicht hat.

Sofern die Kontaktierung der Leitschicht nicht vom freien Ende des übergestülpten Abschnittes her erfolgen soll, weil man beispielsweise das Einführen einer Leitung von diesem Ende her zwischen die übereinanderliegenden Abschnitte vermeiden will, kann man den Isolier- und Dichtungskörper mit einer Durchtrittsöffnung für die Anschlußleitung versehen. Vorzugsweise durchdringt diese Durchtrittsöffnung den Isolier- und Dichtungskörper bei nicht übergestülptem Endabschnitt in radialer Richtung, da sie dann bei der Herstellung des Isolier- und Dichtungskörpers problemlos hergestellt werden kann. Wegen der relativ geringen Wandstärke des Isolier- und Dichtungskörpers im Bereich der beiden hülsenartigen Abschnitte ist es zweckmäßig, die Durchtrittsöffnung durch einen angeformten Hohlzapfen zu verlängern. Vorzugsweise ist die Durchtrittsöffnung in der die geringe Wandstärke aufweisenden Verbindungszone vorgesehen.

Bei einer bevorzugten Ausführungsform weist derjenige hülsenartig ausgebildete Endabschnitt, über den der andere Endabschnitt übergestülpt ist, eine an einen außen konischen Abschnitt anschließende Endzone auf, deren Außenmantelfläche die Form eines sich zu dem konischen Abschnitt hin öffnenden Trichters hat. Es braucht dann nur diese Endzone und/oder die an ihr anliegende Endzone des übergestülpten Endabschnittes mit einer leitenden Schicht versehen zu sein, um eine gute Feldsteuerung zu erzielen.

Der übergestülpte Abschnitt kann über das an den konischen Abschnitt anschließende Ende des innenliegenden Abschnitts überstehen. Dies ist dann besonders vorteilhaft, wenn diese überstehende Zone einen auf Erdpotential liegenden Körper kontaktieren kann, weil hierdurch in einfacher Weise die elektrisch leitende Schicht auf Erdpotential gelegt werden kann zur Bildung einer Feldsteuerelektrode. Selbstverständlich ist eine Erdung der leitenden Schicht auch mittels einer Leitung möglich, welche wie eine Signalleitung die leitende Schicht direkt oder indirekt kontaktiert, jedoch andererseits mit einem auf Erdpotential liegenden Körper verbunden ist.

Wird die leitende Schicht als Spannungssensor-Elektrode benötigt, also als eine Elektrode, die durch ihre kapazitive Ankopplung an das Kabel ein Spannungssignal liefert, das die vom Kabel geführte Spannung kennzeichnet, läßt man zweckmäßigerweise die leitende Schicht im Abstand von dem außen konischen Abschnitt endet. Man kann dann an der Ringzone, die zwischen diesem Ende und dem außen konischen Abschnitt liegt, den übergestülpten und in diesem Bereich keine leitende Schicht tragenden Abschnitt mit radialer Spannung anliegen lassen, wodurch man eine mechanische und elektrische Abdichtung der leitenden Schicht gegenüber den den Isolier- und Dichtungskörper außen umgebenden Bauteilen hat.

Zur Bildung der Feldsteuerelektrode und/oder der Spannungssensor-Elektrode kommt nicht nur eine Beschichtung des innenliegenden Abschnittes des Isolier- und Dichtungskörpers oder des über diesen gestülpten Abschnittes in Frage, sondern auch eine Leitschicht auf beiden Abschnitten.

Im folgenden ist die Erfindung anhand von zwei in der Zeichnung dargestellten Ausführungsbeispielen im einzelnen erläutert.

Es zeigen:
- Fig. 1: einen Längsschnitt des ersten Ausführungsbeispiels im montierten Zustand,
- Fig. 2: einen Längsschnitt des ersten Ausführungsbeispiels am Ende des Fertigungsvorganges,
- Fig. 3: einen Längsschnitt des zweiten Ausführungsbeispiels am Ende des Fertigungsvorgangs,
- Fig. 4: einen Längsschnitt des zweiten Ausführungsbeispiels nach dem Umstülpvorgang.

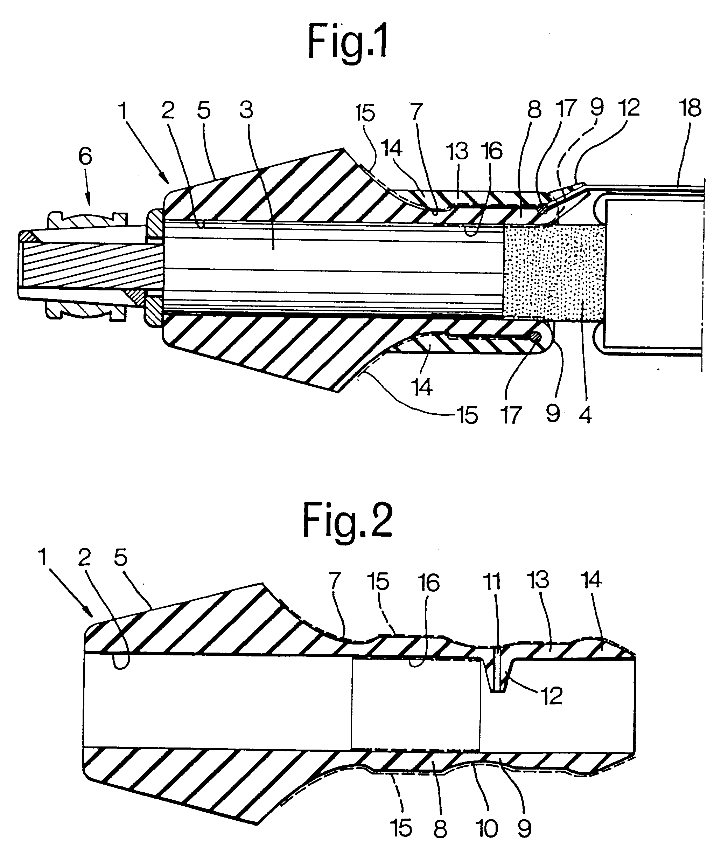

Ein als Ganzes mit 1 bezeichneter, aus Siliconkautschuk hergestellter Isolier- und Dichtungskörper für einen Kabelstecker des bekannten Innenkonussystems weist einen zentralen, zylindrischen Durchgangskanal 2 auf, dessen Durchmesser etwas kleiner gewählt ist als derjenige der Kunststoffisolation 3 des aufzunehmenden Kabels, das im Bereich des Isolier- und Dichtungskörpers 1 bis auf diese Kunststoffisolation 3 abgemantelt ist, wobei allerdings die sich auf der Kunststoffisolation 3 befindende Leitschicht 4 nicht vollständig entfernt ist und deshalb vom Isolier- und Dichtungskörper 1 noch übergriffen wird, wie Fig. 1 zeigt.

Der Isolier- und Dichtungskörper 1 weist einen in den Fig. 1 und 2 links dargestellten Endabschnitt auf, der einen sich vom freien Ende weg erweiternden Außenkonus 5 bildet. Dieser Endabschnitt liegt, wenn sich der Kabelstecker in der zugeordneten Steckbuchse befindet, mit Druck sowohl an der Kunststoffisolation 3 als auch mit dem Außenkonus 5 an einer konischen Aufnahme der Steckbuchse an und bildet dadurch die mechanische und elektrische Dichtung zwischen dem Kontaktsystem, von dem in Fig. 1 nur der Kontaktkörper 6 des Steckers dargestellt ist, und der Umgebung.

An den den Außenkonus 5 bildenden Endabschnitt schließt sich ein Abschnitt des Isolier- und Dichtungskörpers 1 an, dessen Außenmantelfläche die Form eines Trichters hat, der sich in der Richtung vom Außenkonus 5 weg verengt und in eine ausgerundete Ringnut 7 übergeht, die konzentrisch zum Durchgangskanal 2 in dem sich anschließenden, hülsenförmigen Abschnitt 8 des Isolier- und Dichtungskörpers 1 vorgesehen ist. Dieser Abschnitt 8 hat, wie insbesondere Fig. 2 zeigt, eine im Vergleich zu dem den Außenkonus 5 bildenden Endabschnitt geringe Wandstärke.

An den Abschnitt 8, der mit Ausnahme der Ringnut 7 eine zylindrische Außenmantelfläche hat, schließt sich an das der Ringnut 7 abgewandte Ende eine Verbindungszone 9 an, die infolge einer ausgerundeten Ringnut 10 in ihrer bei der Herstellung außen liegenden Mantelfläche eine noch geringere Wandstärke als der Abschnitt 10 hat. Diese Verbindungszone 9 wird, im Ausführungsbeispiel in der in Fig. 2 rechts dargestellten Hälfte, von einer Durchtrittsöffnung 11 durchdrungen, die einen radialen Verlauf hat, solange sich der Isolier- und Dichtungskörper in dem in Fig. 2 dargestellten Zustand befindet. Ein an die Verbindungszone 9 angeformter, bei der Herstellung in den Durchgangskanal 2 ragender Hohlzapfen 12 verlängert die Durchtrittsöffnung 11.

An die Verbindungszone 9 schließt sich ein hülsenartig ausgebildeter Endabschnitt 13, dessen WAndstärke im Ausführungsbeispiel etwas geringer ist als diejenige des Abschnittes 8, an. Die freie Endzone des Endabschnittes 13 weist einen nach außen überstehenden Ringwulst 14 auf, dessen Querschnittsform an diejenige der Ringnut 7 angepaßt ist. Die axiale Länge des Endabschnittes 13 zwischen dem Ringwulst 14 und der Verbindungszone 9 ist gleich der axialen Länge des zwischen der Ringnut 7 und der Verbindungszone 9 liegenden Teils des Abschnittes 8 gewählt.

Von dem im Durchmesser größeren Ende des Außenkonusses 5 bis zum Ende des Endabschnittes 13 ist der Isolier- und Dichtungskörper 1 auf seiner Außenmantelfläche mit einer elektrisch leitenden Schicht 15 versehen, die in dem sich an den Außenkonus 5 anschließenden, trichterförmigen Bereich eine der kapazitiven Spannungsmessung dienende Elektrode bildet. Die Schicht 15 endet im Abstand von der Ringkante am Übergang vom Außenkonus 5 zum trichterförmigen Abschnitt. Dieser Abstand ist so groß gewählt, daß kein elektrischer Überschlag zur Schicht 15 erfolgen kann. Außerdem ist im Ausführungsbeispiel die Innenmantelfläche des Abschnittes 8 mit einer Leitschicht 16 versehen, welche, wie Fig. 1 zeigt, im montierten Zustand des Isolier- und Dichtungskörpers 1 die auf der Kunststoffisolation 3 des Kabels vorhandene Leitschicht 4 kontaktiert. Diese Leitschicht 16 ist jedoch nicht erforderlich, wenn die sich auf der Kunststoffisolation 3 befindende Leitschicht 4 nur so weit entfernt wird, daß sie dort endet, wo im Ausführungsbeispiel die Leitschicht 16 endet.

Nach der Fertigung hat der Isolier- und Dichtungskörper 1 die in Fig. 2 dargestellte Form. Ehe dieser auf die Kunststoffisolation 3 des Kabels aufgeschoben wird, wird in die von der Verbindungszone 9 gebildete Ringnut 10 ein elektrisch leitender, 0-ringartiger, elastischer Ringkörper 17 eingelegt, mit dem der eine Endabschnitt einer Anschlußleitung 18 kontaktbildend verbunden ist. Der blanke Endabschnitt der Anschlußleitung 18 kann sich aber auch über den Ringkörper 17 hinaus erstrecken und an der zylindrischen Außenmantelfläche des Abschnittes 8 anliegen. Der Ringkörper 17 bildet für den durch die Durchtrittsöffnung 11 hindurchgeführten Abschnitt der Anschlußleitung 18 sowohl eine Zugentlastung als auch ein Kontaktelement, da er kontaktbildend an der Leitschicht 15 anliegt. Nach dem Aufbringen des Ringkörpers 17 und dem Hindurchführen der Anschlußleitung 18 durch die Durchtrittsöffnung 11 wird der Endabschnitt 13 über den Abschnitt 8 so weit übergestülpt, daß der Ringwulst 14 in Eingriff mit der Ringnut 7 kommt, wie dies Fig. 1 zeigt. Nun ist der Ringkörper 17 und der gegebenenfalls über diesen überstehende, blanke Endabschnitt der Anschlußleitung 18 zwischen den sich auf dem Abschnitt 8 und dem Endabschnitt 13 befindenden Teilen der Leitschicht 15 eingeklemmt. Damit wird eine gute Kontaktbildung zwischen der Anschlußleitung 18 und der Elektrode hergestellt, welche durch den über die innere Leitschicht 16 überstehenden, trichterförmigen Abschnitt der Leitschicht 15 gebildet wird.

Dadurch, daß die Durchtrittsöffnung 11 nicht in der Mitte der Ringnut 10 vorgesehen ist, sondern etwas aus der Mitte gegen den Endabschnitt 13 hin versetzt ist, nimmt nach dem Überstülpen des Endabschnittes 13 über den Abschnitt 8 der Hohlzapfen 12 die in Fig. 1 dargestellte Lage ein, in der er schräg nach außen absteht, was erwünscht ist, da die Anschlußleitung 18 über den nicht abgemantelten und damit im Durchmesser größeren Bereich nach außen geführt wird.

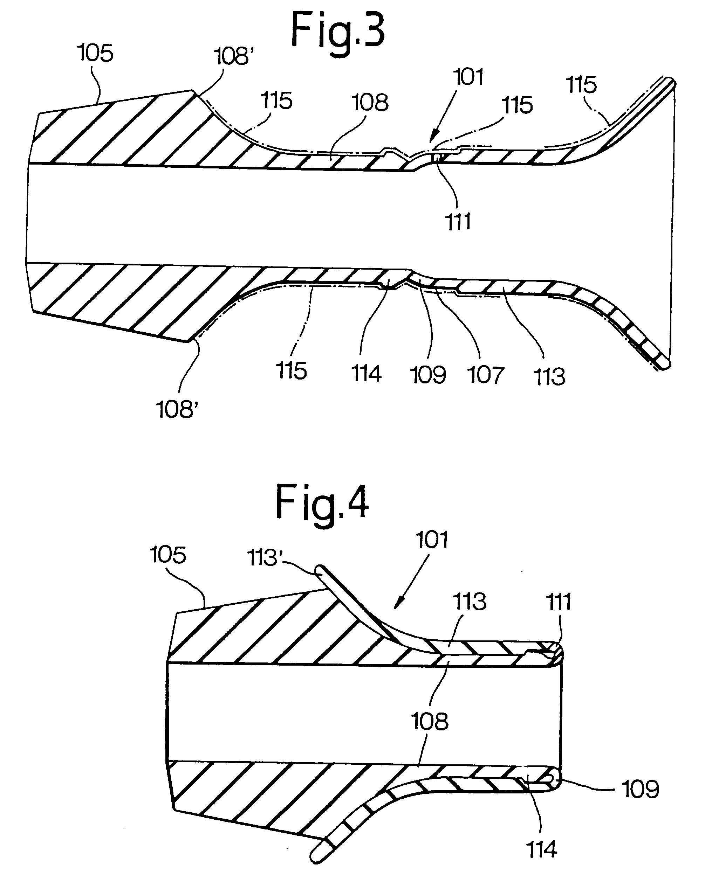

Der als Ganzes mit 101 bezeichnete Isolier- und Dichtungskörper gemäß dem zweiten Ausführungsbeispiel besteht wie der Isolier- und Dichtungskörper 1 des ersten Ausführungsbeispiels aus Siliconkautschuk und ist für einen Kabelstecker des bekannten Innenkonussystems bestimmt. Sein in Fig. 3 links dargestellter Endabschnitt entspricht in seiner Form dem entsprechenden Endabschnitt des ersten Ausführungsbeispiels und bildet deshalb einen sich vom freien Ende weg erweiternden Außenkonus 105. Ferner schließt sich wie bei dem ersten Ausführungsbeispiel an diesen Endabschnitt ein Abschnitt 108 an, dessen Außenmantelfläche die Form eines Trichters hat, der sich in der Richtung vom Außenkonus eg verengt und in eine zylindrische Zone übergeht. An das vom Außenkonus 105 wegweisende Ende dieser Zone schließt sich ein radial nach außen überstehender Ringwulst 114 an, der ein sägezahnähnliches Querschnittsprofil mit eine radialen Schulter auf der gegen den Außenkonus 105 weisenden Flanke hat. Die andere, geneigte Flanke geht in die im Durchmesser reduzierte Verbindungszone 109 über, welche die Verbindung herstellt zu dem Endabschnitt 113 des Isolier- und Dichtungskörpers 101, der über den Abschnitt 108 übergestülpt wird.

Der Endabschnitt 113 weist im Anschluß an die Verbindungszone 109 eine zylindrische Zone auf, deren Innendurchmesser etwas größer ist als derjenige des Abschnittes 108. An diese zylindrische Zone schließt sich eine zum freien Ende hin trichterförmig erweiternde Zone an, wobei die Trichterform derjenigen angepaßt ist, welche die Außenmantelfläche des Abschnittes 108 im Anschluß an den Außenkonus 105 bildet. Sie hat also im Anschluß an eine kreisbogenförmige Krümmung, die tangential an die zylindrische Zone anschließt, einen kegelmantelförmigen Bereich, in den der kreisbogenförmig gekrümmte Bereich tangential übergeht.

Die axiale Länge des Endabschnitts 113 ist, wie Fig. 4 zeigt, größer als diejenige des Abschnittes 108, so daß im übergestülpten Zustand eine Endzone 113' ein Stück weit über das an den Außenkonus 105 anschließende Ende des Abschnittes 108 übersteht. Ferner zeigt Fig. 4, daß der Endabschnitt 113 in unmittelbarem Anschluß an die Verbindungszone 109 eine Ringnut 107 aufweist, welche den Ringwulst 114 vollständig aufnimmt, wenn der Endabschnitt 113 vollständig über den Abschnitt 108 übergestülpt ist. Bei einem unvollständigen Überstülpen ruft der Ringwulst 114 eine Auswölbung des Endabschnittes 113 hervor, was dem Monteur anzeigt, daß der übergestülpte Endabschnitt 113 noch nicht seine richtige Position relativ zum Endabschnitt 118 hat.

Wie bei dem Ausführungsbeispiel gemäß den Fig. 1 und 2 wird die Außenmantelfläche des Abschnittes 108 und des Endabschnitts 113 mit einer elektrisch leitenden Schicht 115 versehen, die aus elektrisch leitendem Silicon besteht. Die leitende Schicht beginnt in einem Abstand von mehreren Millimetern von dem an den Außenkonus 105 anschließenden Anfang des Abschnittes 108 und erstreckt sich über den Ringwulst 114, die Verbindungszone 109 und die Ringnut 107 hinweg bis in den zylindrischen Bereich des Endabschnitts 113. Sofern die leitende Schicht 115 sowohl als Elektrode eines Spannungssensors als auch als Feldsteuerelektrode dient, endet sie hier oder zumindest an einer Stelle der sich trichterförmig erweiternden Zone, die im übergestülpten Zustand des Endabschnitts 113 nicht über den Anfang der leitenden Schicht 115 im Abstand vom Außenkonus 105 übersteht. Dann ist nämlich gewährleistet, daß an der von der leitenden Schicht 115 freien Endzone 108' eine ebenfalls von der leitenden Schicht 115 freie Ringzone des Endabschnittes 113 anliegt, wodurch hier eine elektrische Abdichtung der leitenden Schicht 115 nach außen, also gegen ein die Endzone 108' umgebendes Bauteil hin, erzielt wird.

Sofern die leitende Schicht 115 nicht als Elektrode für einen Spannungssensor benötigt wird, ist es zweckmäßig, die leitende Schicht 115 auf Erdpotential zu legen, da dann die erzielbare Feldsteuerung besser ist, als wenn die leitende Schicht 115 auf einem höheren Potential liegt. Deshalb wird, wenn die leitende Schicht 115 nur der Feldsteuerung dient, sie bis zum freien Ende des Endabschnitts 113 verlängert. Es ist dann auch die Endzone 113' mit der leitenden Schicht 115 versehen. Im Bereich der Endzone 113' wird dann die leitende Schicht 115 in Anlage an ein auf Erdpotential liegendes Bauteil gebracht. Diese Art der Erdung ist einfacher als eine Erdung mittels einer Leitung, welche wie eine Signalleitung elektrisch leitend mit der leitenden Schicht 115 verbunden werden muß.

Eine Signalleitung könnte zwar von der Endzone 113' her zwischen den Endabschnitt 113 und den Abschnitt 108 eingeführt werden. Vorteilhafter ist es aber, wie bei dem Ausführungsbeispiel gemäß den Fig. 1 und 2, in der Verbindungszone 109 eine Durchtrittsöffnung 111 vorzusehen, welche wie bei dem ersten Ausführungsbeispiel durch einen angeformten, nicht dargestellten Hohlzapfen verlängert sein kann.

## Patentansprüche

1. Elastisch verformbarer Isolier- und Dichtungskörper für Kabelstecker und dergleichen mit einem zentralen Durchgangskanal zur Aufnahme eines Kabels eines Energieversorgungssystems, insbesondere eines Mittelspannungs- oder Hochspannungsenergieversorgungssystems, und mit einer auf die Oberfläche des Isolier- und Dichtungskörpers aufgebrachten, elektrisch leitenden Schicht,
dadurch gekennzeichnet, daß der eine, hülsenartig ausgebildete Endabschnitt (13; 113,113') des Isolier- und Dichtungskörpers (1; 101) über den sich an ihn anschließenden, ebenfalls hülsenartig ausgebildeten Abschnitt (8; 108) stülpbar ist.

2. Isolier- und Dichtungskörper nach Anspruch 1, dadurch gekennzeichnet, daß der übergestülpte Abschnitt (13; 113) mit radialem Druck am anderen hülsenartigen Abschnitt (8; 108) anliegt.

3. Isolier- und Dichtungskörper nach Anspruch 1 oder 2, dadurch gekennzeichnet, daß die beiden hülsenartig ausgebildeten Abschnitte (8,13; 108,113,113') über eine Verbindungszone (9; 109) mit verringerter Wandstärke miteinander in Verbindung stehen.

4. Isolier- und Dichtungskörper nach einem der Ansprüche 1 bis 3, dadurch gekennzeichnet, daß der eine hülsenartig ausgebildete Abschnitt (13; 108) eine vorspringende, ringwulstartige Materialpartie (14; 114) aufweist, die vollständig von einer ringnutartigen Vertiefung (7; 107) des anderen hülsenförmigen Abschnittes (8; 113) aufgenommen ist, wenn die beiden hülsenartigen Abschnitte (8,13; 108,113) übereinandergestülpt sind.

5. Isolier- und Dichtungskörper nach Anspruch 4, dadurch gekennzeichnet, daß die ringwulstartige Materialpartie (114) ein sägezahnartiges Querschnittsprofil hat.

6. Isolier- und Dichtungskörper nach einem der Ansprüche 1 bis 5, dadurch gekennzeichnet, daß ein Endabschnitt einer vorzugsweise zugentlasteten Leitung (18) und/oder ein mit diesem Endabschnitt verbundener, elektrisch leitender Kontaktkörper (17) zwischen den beiden übereinandergestülpten Abschnitten (8,13; 108,113) des Isolier- und Dichtungskörpers (1; 101) unter Bildung eines elektrischen Kontaktes mit der leitenden Schicht (15; 115) eingeklemmt ist.

7. Isolier- und Dichtungskörper nach einem der Ansprüche 1 bis 6, dadurch gekennzeichnet, daß er mit einer Durchtrittsöffnung (11; 111) für eine Leitung (18) versehen ist.

8. Isolier- und Dichtungskörper nach Anspruch 7, dadurch gekennzeichnet, daß die Durchtrittsöffnung (11; 111) den Isolier- und Dichtungskörper (1; 101) bei nicht übergestülptem Endabschnitt (13; 113) in radialer Richtung durchdringt und durch einen radial nach innen ragenden Hohlzapfen (12) verlängert ist.

9. Isolier- und Dichtungskörper nach Anspruch 8, dadurch gekennzeichnet, daß die Durchtrittsöffnung (11; 111) in der Verbindungszone (9; 109) vorgesehen ist.

10. Isolier- und Dichtungskörper nach einem der Ansprüche 1 bis 9, dadurch gekennzeichnet, daß derjenige hülsenartig ausgebildete Endabschnitt (8; 108), über den der andere Endabschnitt (13; 113) übergestülpt ist, eine an einen Außenkonus (5; 105) anschließende Endzone aufweist, deren Außenmantelfläche die Form eines sich zu dem Außenkonus (5; 105) hin öffnenden Trichters hat.

11. Isolier- und Dichtungskörper nach Anspruch 10, dadurch gekennzeichnet, daß der übergestülpte Abschnitt (113) gegen sein freies Ende hin trichterartig erweitert ist und mit diesem Endbereich die trichterförmige Endzone des innenliegenden Abschnittes (108) wenigstens auf einem Teil von dessen axialer Länge übergreift.

12. Isolier- und Dichtungskörper nach Anspruch 11, dadurch gekennzeichnet, daß die trichterförmige Endzone (13') des übergestülpten Abschnittes (113) über das an den Außenkonus (105) anschließende Ende des hülsenartigen Abschnittes (108) übersteht.

13. Isolier- und Dichtungskörper nach einem der Ansprüche 10 bis 12, dadurch gekennzeichnet, daß die leitende Schicht (15; 115) des vom übergestülpten Abschnitt (13; 113) zumindest unvollständig übergriffenen Abschnittes (8; 108) sich in die trichterförmige Endzone hinein erstreckt.

14. Isolier- und Dichtungskörper nach Anspruch 13, dadurch gekennzeichnet, daß die leitende Schicht (115) im Abstand von dem Außenkonus (105) endet und an der zwischen diesem Ende und dem Außenkonus (105) liegenden Endzone (108') der übergestülpte Abschnitt (113) mit radialer Spannung anliegt, der zumindest in der an dieser Endzone (108') anliegenden Endzone frei von der leitenden Schicht (115) ist.

15. Isolier- und Dichtungskörper nach einem der Ansprüche 10 bis 14, dadurch gekennzeichnet, daß der übergestülpte Abschnitt (13; 113) zumindest im trichterförmigen Bereich seiner Mantelfläche mit der Leitschicht (15; 115) versehen ist.

16. Isolier- und Dichtungskörper nach Anspruch 15, dadurch gekennzeichnet, daß die leitende Schicht (15; 115) auch die übrige, im übergestülpten Zustand innenliegende Mantelfläche des übergestülpten Endabschnittes (13; 113) bedeckt.

17. Isolier- und Dichtungskörper nach einem der Ansprüche 1 bis 16, gekennzeichnet durch eine zusätzliche leitende Schicht (16) auf der Innenseite des vom übergestülpten Endabschnitt (13) abgedeckten Abschnittes (8).

## Claims

1. Resiliently deformable insulation and sealing body for cable connectors and the like, with a central through duct for housing a cable of an energy-supply system, particularly a medium-voltage or high-voltage energy-supply system, and with an electrically-conducting layer applied to the surface of the insulation and sealing body, characterized in that a bush-like end portion (13; 113, 113') of the insulation and sealing body (1; 101) can be turned up over the portion (8; 108) adjoining it, which is also formed like a bush.

2. Insulation and sealing body according to Claim 1, characterized in that the portion (13; 113) which is turned over fits on the other bush-like portion (8; 108) with radial pressure.

3. Insulation and sealing body according to Claim 1 or Claim 2, characterized in that the two bush-like portions (8, 13; 108, 113, 113') are connected to one another by a connection region (9; 109) with reduced wall thickness.

4. Insulation and sealing body according to any one of Claims 1 to 3, characterized in that one bush-like portion (13; 108) has a projecting toroidal material portion (14; 114) which is housed completely by an annular-groove-like recess (7; 107) of the other bush-shaped portion (8; 113) when the two bush-like portions (8, 13; 108, 113) are turned over one another.

5. Insulation and sealing body according to Claim 4, characterized in that the toroidal material portion (114) has a sawtooth-like cross-sectional profile.

6. Insulation and sealing body according to any one of Claims 1 to 5, characterized in that an end portion of a lead (18) which is preferably relieved of strain, and/or an electrically-conducting contact body (17) connected to this end portion, is pinched between the two portions (8, 13; 108, 113) of the insulation and sealing body (1; 101) turned over one another, forming an electrical contact with the conducting layer (15; 115).

7. Insulation and sealing body according to any one of Claims 1 to 6, characterized in that it is provided with a through hole (11; 111) for a lead (18).

8. Insulation and sealing body according to Claim 7, characterized in that, when the end portion (13; 113) is not turned over, the through hole (11; 111) extends through the insulation and sealing body (1; 101) in a radial direction and is extended by an inwardly-projecting hollow stud (12).

9. Insulation and sealing body according to Claim 8, characterized in that the through hole (11; 111) is provided in the connection region (9; 109).

10. Insulation and sealing body according to any one of Claims 1 to 9, characterized in that the bush-like end portion (8; 108) over which the other end portion (13; 113) is turned, has an end region which adjoins an external cone (5; 105) and the external lateral surface of which has the shape of a funnel opening towards the external cone (5; 105).

11. Insulation and sealing body according to Claim 10, characterized in that the turned-over portion (113) is widened like a funnel towards its free end and, with this end region, overlaps the funnel-shaped end region of the inner portion (108) at least on a portion of the axial length thereof.

12. Insulation and sealing body according to Claim 11, characterized in that the funnel-shaped end region (13') of the turned-over portion (113) projects beyond the end of the bush-like portion (108) adjoining the external cone (105).

13. Insulation and sealing body according to any one of Claims 10 to 12, characterized in that the conducting layer (15; 115) of the portion (8; 108) which is at least incompletely overlapped by the turned-over portion (13, 113) extends into the funnel-shaped end region.

14. Insulation and sealing body according to Claim 13, characterized in that the conducting layer (115) ends at a distance from the external cone (105) and the turned-over portion (113) fits closely with radial tension on the end region (108') disposed between this end and the external cone (105) and is free of the conducting layer (115) at least in the end region fitting on this end region (108').

15. Insulation and sealing body according to any one of Claims 10 to 14, characterized in that the turned-over portion (13; 113) is provided with the conducting layer (15; 115) at least in the funnel-shaped region of its lateral surface.

16. Insulation and sealing body according to Claim 15, characterized in that the conducting layer (15; 115) also covers the remaining lateral surface which is on the inside of the turned-over end portion (13; 113) in the turned-over condition.

17. Insulation and sealing body according to any one of Claims 1 to 16, characterized by an additional conducting layer (16) on the inside of the portion (8) covered by the turned-over end portion (13).

## Revendications

1. Corps isolant et d'étanchéité déformable élastiquement, destiné à une prise mâle de cable et analogue et comprenant un canal central de traversée destiné à loger un cable d'un système d'alimentation en énergie, en particulier d'un système d'alimentation en énergie moyenne tension ou haute tension, ainsi qu'une couche conductrice de l'électricité, déposée à la surface du corps isolant et d'étanchéité,
caractérisé en ce qu'une partie d'extrémité (13 ; 113, 113') du corps isolant et d'étanchéité (1 ; 101) qui est réalisée en forme de manchon peut être rabattue par retournement sur la partie également réalisée en forme de manchon (8 ; 108) et qui lui fait suite.

2. Corps isolant et d'étanchéité selon la revendication 1, caractérisé en ce que la partie rabattue par retournement (13 ; 113) est en appui avec pression radiale contre l'autre partie en forme de manchon (8 ; 108).

3. Corps isolant et d'étanchéité selon la revendication 1 ou 2, caractérisé en ce que les deux parties réalisées en forme de manchons (8, 13 ; 108, 113, 113') sont reliées l'une à l'autre par une zone de liaison (9 ; 109) ayant une épaisseur réduite de paroi.

4. Corps isolant et d'étanchéité selon l'une des revendications 1 à 3, caractérisé en ce que l'une des parties réalisées en forme de manchon (13 ; 108) comprend une partie de matière en saillie en forme de bourrelet annulaire (14 ; 114) qui est intégralement logée dans une cavité en forme de gorge annulaire (7 ; 107) de l'autre partie en forme de manchon (8 ; 113) lorsque les deux parties en forme de manchons (8, 13 ; 108, 113) sont superposes après le rabattement.

5. Corps isolant et d'étanchéité selon la revendication 4, caractérisé en ce que la partie de matière en forme de bourrelet annulaire (114) a un profil en coupe transversale en forme de dent de scie.

6. Corps isolant et d'étanchéité selon l'une des revendications 1 à 5, caractérisé en ce qu'une partie d'extrémité d'un conducteur (18) de préférence soustrait à toute traction et/ou un corps de contact (17) conducteur de l'électricité et raccordé à cette partie d'extrémité est enserré entre les deux parties, superposées après le rabattement, (8, 13 ; 108, 113) du corps isolant et d'étanchéité (1 ; 101) en formant un contact électrique avec la couche conductrice (15 ; 115).

7. Corps isolant et d'étanchéité selon l'une des revendications 1 à 6, caractérisé en ce qu'il comporte un trou (11 ; 111) de passage d'un conducteur (18).

8. Corps isolant et d'étanchéité selon la revendication 7, caractérisé en ce que, lorsque la partie d'extrémité (13 ; 113) n'est pas rabattue par retournement, le trou de passage (11 ; 111) traverse le corps isolant et d'étanchéité (1 ; 101) en direction radiale et est prolongé par une cheville creuse (12) orientée radialement vers l'intérieur.

9. Corps isolant et d'étanchéité selon la revendication 8, caractérisé en ce que le trou de passage (11 ; 111) est prévu dans la zone de liaison (9 : 109).

10. Corps isolant et d'étanchéité selon l'une des revendications 1 à 9, caractérisé en ce que la partie d'extrémité réalisée en forme de manchon (8 108), sur laquelle l'autre partie d'extrémité (13 ; 113) est rabattue par retournement, comporte une zone d'extrémité disposée dans le prolongement d'un cône extérieur (5 ; 105) et dont la surface de l'enveloppe extérieure a la forme d'une trémie qui s'ouvre sur le cône extérieur (5 ; 105).

11. Corps isolant et d'étanchéité selon la revendication 10, caractérisé en ce que la partie rabattue par retournement (113) est élargie vers son extrémité libre en forme de trémie et recouvre par cette partie d'extrémité la zone d'extrémité en forme de trémie de la partie (108) située à l'intérieur, au moins sur une partie de la longueur axiale de celle-ci.

12. Corps isolant et d'étanchéité selon la revendication 11, caractérisé en ce que la zone d'extrémité en forme de trémie (13') de la partie rabattue par retournement (113) déborde de l'extrémité de la partie en forme de manchon (108) qui est dans le prolongement du cône extérieur (105).

13. Corps isolant et d'étanchéité selon l'une des revendications 10 à 12, caractérisé en ce que la couche conductrice (15 ; 115) de la partie (8 ; 108) recouverte au moins incomplètement par la partie rabattue par retournement (13 ; 113) se prolonge dans la zone d'extrémité en forme de trémie.

14. Corps isolant et d'étanchéité selon la revendication 13, caractérisé en ce que la couche conductrice (115) s'achève à distance du cône extérieur (115) et est en appui sous traction radiale contre la zone d'extrémité (108') de la partie rabattue par retournement (113) qui est située entre cette extrémité et le cône extérieur (105), ladite partie rabattue par retournement étant exempte de la couche conductrice (115) au moins dans la zone d'extrémité qui est en appui contre cette zone d'extrémité (108').

15. Corps isolant et d'étanchéité selon l'une des revendications 10 à 14, caractérisé en ce que la partie rabattue par retournement (13 ; 113) est munie de la couche conductrice (15 ; 115) au moins dans la zone en forme de trémie de la surface de son enveloppe.

16. Corps isolant et d'étanchéité selon la revendication 15, caractérisé en ce que la couche conductrice (15 ; 115) recouvre aussi le reste de la surface de l'enveloppe de la partie d'extrémité rabattue par retournement (13 ; 113) qui est située intérieurement à l'état rabattu par retournement.

17. Corps isolant et d'étanchéité selon l'une des revendications 1 à 16, caractérisé par une couche conductrice supplémentaire (16) située sur le côté intérieur de la partie (8) recouverte par la partie d'extrémité rabattue par retournement (13).
